# FASCICULE DE BREVET EUROPEEN

(11) **EP 0 794 651 B1**
(45) Date de publication et mention de la délivrance du brevet: **09.07.2003**
(21) Numéro de dépôt: 97400480.6
(22) Date de dépôt: 03.03.1997
(51) Int. Cl.: H04M 17/00, H04M 15/00

(54) **Procédé de prépaiement de consommation de communications téléphoniques**
Vorausbezahlungsverfahren für Telefonkommunikationsnutzung
Method of prepayment for usage of telephone communications

(30) Priorité: 07.03.1996 FR 9603128
(43) Date de publication de la demande: 10.09.1997
(73) Titulaire: FRANCE TELECOM, 75015 Paris (FR)
(72) Inventeur: Martin, Daniel, 56470 La Trinité Sur Mer (FR); Grèzes, Christian, 92130 Issy Les Moulineaux (FR); Seghers, Annick, 75017 Paris (FR)
(74) Mandataire: Cabinet Martinet & Lapoux

(56) Documents cités:
- EP-A- 0 589 757
- EP-A- 0 698 987
- DE-A- 4 419 651
- US-A- 5 359 642

## Description

La présente invention concerne un procédé de prépaiement de consommation de communications téléphoniques. De tels procédés sont généralement connus, comme par example du document DE-A-4419651.

Tout particulièrement, l'invention a pour objectif de limiter les risques de communications téléphoniques impayées établies au moyen d'un terminal téléphonique et d'éviter des procédures contentieuses inhérentes à ces impayés.

A cette fin, un procédé pour prépayer une consommation de communications téléphoniques à établir au moyen d'un terminal prédéterminé à travers un réseau téléphonique, comprenant les étapes suivantes :
- établir une communication depuis un terminal quelconque avec un moyen de traitement de prépaiement à travers le réseau de manière à transmettre un message d'identification identifiant le terminal prédéterminé au moyen de traitement de prépaiement,
- en réponse à une identification du terminal prédéterminé, demander depuis le terminal quelconque un prépaiement de consommation de communications téléphoniques au moyen de traitement de prépaiement, et
- lorsque la demande de prépaiement est acceptée par le moyen de traitement de prépaiement, payer un montant transmis depuis le terminal quelconque afin que le moyen de traitement de paiement incrémente un compte de consommation associé au terminal prédéterminé,
est caractérisé en ce que l'étape d'établir comprend la composition d'un numéro d'identification identifiant le terminal prédéterminé et d'une clé de contrôle sur le terminal quelconque de manière à les inclure dans le message d'identification, et le contrôle de la cohérence entre le numéro d'identification et la clé selon un algorithme prédéterminé dans le moyen de traitement de prépaiement, et lorsque la cohérence est établie, la vérification de l'appartenance du numéro d'identification à une liste enregistrée dans le moyen de traitement de prépaiement, la communication étant coupée par le moyen de traitement de paiement lorsque le nombre de défauts de cohérence excède un nombre prédéterminé, ou le numéro d'identification n'est pas inclus dans la liste.

Le terminal quelconque peut être tout type de terminal téléphonique, y compris radiotéléphonique, et peut être également le terminal prédéterminé.

Tant que le compte de consommation est positif, l'usager du terminal prédéterminé peut consommer des communications téléphoniques, et doit reverser un montant dès que le compte devient négatif. L'usager est ainsi plus sensibilisé au coût des communications et l'organisme gérant les terminaux est plus déchargé des contentieux d'impayés de communications avec ses clients.

Selon une réalisation particulière lorsque les terminaux prédéterminé et quelconque sont confondus en un terminal radiotéléphonique relié au réseau téléphonique par un réseau radiotéléphonique, la composition d'un numéro d'identification et d'une clé de contrôle sur le terminal quelconque et le contrôle de la cohérence entre le numéro d'identification et la clé sont supprimés. Le numéro d'identification sans clé de contrôle est inclus dans le message d'identification qui est transmis par le réseau radiotéléphonique au moyen de traitement de prépaiement après un appel du réseau radiotéléphonique par le terminal radiotéléphonique en composant un numéro téléphonique particulier, et la traduction du numéro téléphonique particulier en un numéro d'appel du moyen de traitement de prépaiement par le réseau radiotéléphonique. La communication est coupée par le moyen de traitement de paiement lorsque, après la vérification de l'appartenance du numéro d'identification à la liste, le numéro d'identification n'est pas inclus dans la liste.

Le moyen de traitement de prépaiement transmet des messages au terminal quelconque à travers un serveur de messages vocaux et/ou alphanumériques de manière à dialoguer avec tous les types de terminaux téléphoniques.

L'étape de demander comprend la sélection entre au moins deux modes de paiement qui peuvent être un paiement par titre électronique de paiement (TEP) ou un paiement par carte bancaire (CB).

Pour un traitement électronique de paiement, l'étape de demander comprend la composition d'un code secret au terminal quelconque. Le moyen de traitement de prépaiement accepte alors la demande de prépaiement lorsque le code secret est reconnu en association avec le message d'identification et n'a pas été tenté d'être composé un nombre de fois prédéterminé.

Le code secret est enregistré dans le moyen de traitement de prépaiement, sans comparaison au message d'identification, lorsque le compte de consommation est incrémenté pour la première fois par un montant résultant d'un titre électronique de paiement.

Pour un paiement par carte bancaire, l'étape de demander comprend la composition sur le terminal quelconque d'un numéro prédéterminé, tel que numéro de carte bancaire, transmis au moyen de traitement de prépaiement. Ce dernier accepte la demande de prépaiement par exemple lorsque le numéro prédéterminé a une longueur correcte et/ou n'appartient pas à une liste de numéro de carte bancaire prédéterminée.

En général, le moyen de traitement de prépaiement peut refuser le montant versé lorsque l'un des cumuls de montants versés au moyen de l'un sélectionné de modes de paiement, tels que carte bancaire et titre électronique de paiement, et de montants versés sur le compte de consommation associé au terminal prédéterminé excède un montant maximal respectif sur un nombre respectif de jours, et/ou lorsque le nombre de paiements au moyen du mode de paiement sélectionné excède un nombre maximal respectif sur un nombre respectif de jours.

A l'étape de payer, le moyen de traitement de prépaiement peut transmettre au terminal quelconque le solde du compte de consommation avant et après incrémentation du compte de consommation afin que l'usager vérifie son opération de paiement. Pour une raison analogue, après incrémentation du compte de consommation, le moyen de traitement de prépaiement peut transmettre un certificat provisoire de paiement au terminal quelconque, lorsque le paiement est un titre électronique de paiement.

Pour mieux sécuriser les paiements par titre TEP, le procédé peut comprendre, après l'étape de payer, une invitation à changer un code secret pour titre électronique de paiement, et en cas de réponse positive à l'invitation, un changement de code secret.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme schématique de moyens matériels et logiciels pour la mise en oeuvre d'un prépaiement de consommations téléphoniques pour un poste radiotéléphonique mobile rattaché au réseau téléphonique commuté à travers un réseau de télécommunication spécifique ;
- la figure 2 est un organigramme de deux premières étapes principales d'un procédé de prépaiement de consommation de communications téléphoniques selon l'invention, plus précisément une étape d'appel et d'identification de poste et une étape de mode de paiement ; et
- la figure 3 est un organigramme des deux dernières étapes principales du procédé de prépaiement, plus précisément une étape de paiement et une étape de changement de code.

A titre de réalisation préférée, le procédé de prépaiement selon l'invention est décrit ci-après pour le prépaiement d'une consommation de communications téléphoniques, de départ et/ou d'arrivée, qui sont établies, entre autres, au moyen d'un terminal prédéterminé, tel qu'un poste, dit également combiné, radiotéléphonique mobile portable PRM de type urbain et de faible portée radioélectrique, selon la norme CT2-CAI.

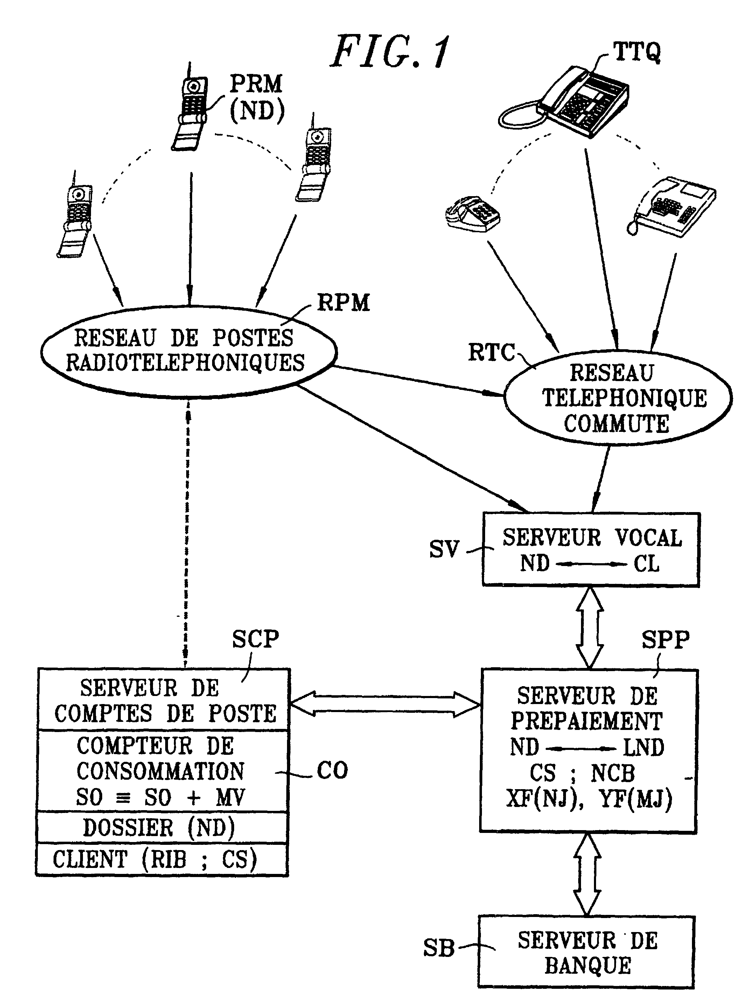

En référence à la figure 1, les **moyens matériels et logiciels** essentiels pour la mise en oeuvre du procédé de prépaiement selon cette réalisation comprennent
- un réseau numérique spécifique de postes radiotéléphoniques mobiles RPM accessible par tout poste PRM à travers des bornes fixes radio reliées par groupe à des unités de raccordement de bornes,
- un quelconque terminal téléphonique classique TTQ raccordé au réseau téléphonique commuté RTC directement ou à travers des réseaux de télécommunication spécifiques, tels qu'un réseau de radiotéléphonie, un réseau téléphonique privé, un réseau de transmission par paquets, etc...,
- un serveur vocal SV relié au réseau téléphonique RTC et au réseau de postes mobiles RPM à travers une ligne spécialisée ou bien une liaison par paquets de type X25 (circuit virtuel commuté), et
- trois autres serveurs SPP, SCP et SB reliés entre eux par des liaisons par paquets de type X25 (circuits virtuels commutés).

Le serveur SPP est un serveur de prépaiement qui constitue le coeur des moyens de prépaiement illustrés schématiquement à la figure 1. La plupart des instructions que le serveur SPP reçoit des serveurs SB et SCP sont retransmises au serveur vocal SV qui les traduit en message vocal à l'attention de l'usager qui utilise un terminal téléphonique quelconque TTQ ou bien un poste téléphonique mobile PRM pour procéder au prépaiement, comme cela apparaîtra dans la suite.

Le serveur SCP est un serveur de comptes de poste radiotéléphonique mobile qui contient toutes les données propres à identifier un poste PRM ainsi que, de préférence, celle identifiant le client de ce poste qui l'a acquis auprès de l'organisme gérant les postes mobiles PRM. En particulier, le serveur de comptes de poste contient des compteurs de consommation de communications téléphoniques CO qui sont respectivement associés aux postes radiotéléphoniques mobiles PRM. Chaque compteur CO est incrémenté d'un montant MV chaque fois qu'un usager du poste PRM associé au compteur est autorisé à effectuer un prépaiement, et est décrémenté après chaque consommation téléphonique consommée depuis le poste PRM. Le compteur de consommation CO est en relation avec l'unité de raccordement de bornes desservant le poste PRM, laquelle transmet au compteur CO un ticket de communication nominatif contenant toutes les informations nécessaires à la valorisation de la communication. Le serveur SCP est en pratique inclus dans le système de gestion des clients du réseau de postes radiotéléphoniques mobiles RPM et en relation avec ce réseau RPM.

Dans le serveur de prépaiement SPP est préenregistré une liste LND de numéros de dossier ND qui sont respectivement associés aux postes radiotéléphoniques mobiles PRM et donc aux compteurs CO inclus dans le serveur SCP.

Le serveur SB est un serveur de banque qui est géré par une banque avec laquelle l'organisme gérant des postes radiotéléphoniques mobiles PRM a passé des accords de transaction pour le compte de ses clients/usagers.

Les moyens matériels et logiciels montrés à la figure 1 permettent ainsi d'enregistrer un versement monétaire MV fait a priori. Ce versement MV constitue une réserve dont est déduit le montant de chaque communication téléphonique effectuée par le poste associé PRM. Le système bloque toute possibilité de nouvel appel à l'épuisement du crédit dans le compteur associé CO, sans qu'il y ait de blocage en cours de communication, le solde pouvant devenir négatif.

Aucune facture n'est adressée au client/usager du poste PRM. Seul le détail des communications est fourni, à la demande du client, par l'organisme gestionnaire du réseau de postes radiotéléphoniques mobiles RPM.

Lors de l'**ouverture d'un dossier** d'abonnement ou de l'activation d'un poste radiotéléphonique, pour un client au service de prépaiement de consommation téléphonique, un numéro de dossier ND à six ou sept caractères lui est affecté au client, c'est-à-dire le numéro ND est associé au poste radiotéléphonique mobile RPM du client, ce type de poste étant identifié par un numéro de poste NP qui peut être détecté par le réseau RPM. Comme les postes PRM sont associés de manière biunivoque aux numéros de dossier ND, chaque nouveau numéro ND est comparé aux numéros de dossier dans le serveur SCP afin d'éviter les doublons. En complément, une clé de contrôle CL à un caractère est calculée à partir du numéro de dossier ND selon un algorithme prédéterminé défini par l'organisme gérant les postes radiotéléphoniques mobiles. Cette clé est saisie par l'usager lors de versements au moyen d'un terminal téléphonique TTQ et garantit l'exactitude du numéro de dossier. Par contre, le numéro de dossier complet ND avec sa clé CL n'est pas saisi en cas d'appel du serveur vocal SV à partir du poste PRM. Pour mémoire, une carte-badge comportant le numéro de dossier ND et sa clé CL est remise au client.

A l'ouverture du dossier, un contrat spécifique est établi et, outre des frais de mise en service, un premier montant au moins égal à une somme minimale est versé par le client/usager de poste. Ce montant, qui peut être également versé lors d'une première activation du poste, est enregistré dans le compteur CO du serveur SCP affecté au poste PRM du client. En même temps, le numéro de dossier complet ND + CL est enregistré dans le serveur SPP et transmis par la liaison correspondante X25 au serveur de prépaiement SPP qui le classe dans une liste de numéros de dossier LND.

Ensuite, le compteur de consommation CO est rechargé par accès au serveur vocal SV et à travers le serveur de prépaiement SPP, par des paiements par carte bancaire CB ou par titre électronique de paiement TEP selon le procédé de l'invention ou par envoi d'un chèque à un centre de gestion des clients de poste PRM.

Le paiement par titre électronique de paiement TEP nécessite la remise préalable par le client d'un relevé d'identité bancaire RIB de son compte bancaire et d'une autorisation bancaire de prélèvement du compte par titre électronique de paiement de la banque concernée, toutes ces données étant ensuite enregistrées dans le serveur SPP et dans le serveur de banque SB. Le paiement est effectué par tranches, par exemple de cent Francs, et est limité à un montant maximum par exemple de trois cents Francs.

Trois **options de paiement** sont proposées au client. Les deux premières font partie du procédé de prépaiement selon l'invention. Pour un dossier donné, aucune option n'est exclusive d'une autre.

Pour l'option de paiement par titre électronique de paiement TEP, le client fournit un relevé d'identité bancaire RIB, ainsi qu'une demande d'autorisation de prélèvement par titre électronique de paiement signée. Le relevé RIB est envoyé par courrier à l'organisme gérant le serveur de prépaiement SPP.

Pour simplifier les opérations de paiement par titre électronique de paiement, un code secret CS à quatre chiffres est associé au relevé RIB du client. Le client compose le code secret CS à chaque opération de paiement, et cela quel que soit le mode d'accès au serveur vocal SV. Le code secret CS est personnalisé par le client lui-même au cours de la première opération de prépaiement. Ce code secret est mémorisé au niveau du serveur de prépaiement SPP, et n'est mémorisé ni dans le serveur de comptes des postes mobiles SCP, ni dans le serveur vocal SV.

La seconde option concerne un paiement par carte bancaire. A chaque opération de paiement, le client, lorsqu'il appelle depuis un poste téléphonique quelconque TTQ et a composé son numéro de dossier complet ND + CL, compose les chiffres de son numéro de carte bancaire NCB, qui peut comprendre en pratique jusqu'à 19 chiffres, suivi de la touche dièse #. En cas d'appel depuis le poste radiotéléphonique mobile PRM, le numéro de dossier n'est pas à composer par le client et est composé par le réseau RPM.

Cette seconde option satisfait les besoins suivants :
- payeurs multiples sur un même numéro de dossier,
- clients ne choisissant pas l'option de paiement par titre électronique de paiement et code secret,
- versement ponctuel en cas de changement ou de perte du code secret CS de paiement par titre électronique.

La troisième option est un prépaiement par chèque.

Toutes les informations relatives à des dossiers constitués et des dossiers supprimés alimentent, par exemple une fois par jour, le serveur SCP qui ensuite en transmet esssentiellement au serveur SPP qui en retransmet au serveur SB.

Dans la description qui suit, le mot "usager" désigne le client auquel est confié un poste prédéterminé PRM et qui est la seule personne connue de l'organisme gérant les postes PRM, ou bien toute personne souhaitant utiliser le poste PRM et/ou verser un montant au crédit du compte CO du poste PRM dans le serveur SCP, en utilisant le poste PRM ou n'importe quel terminal téléphonique TTQ.

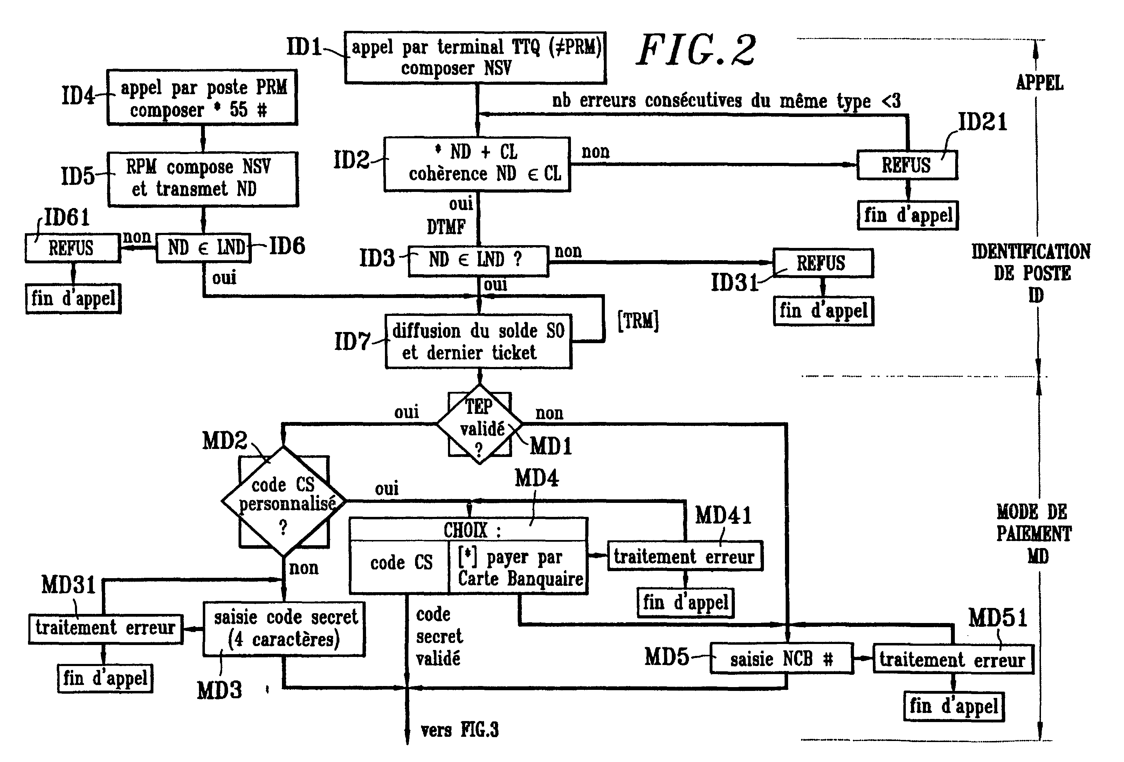

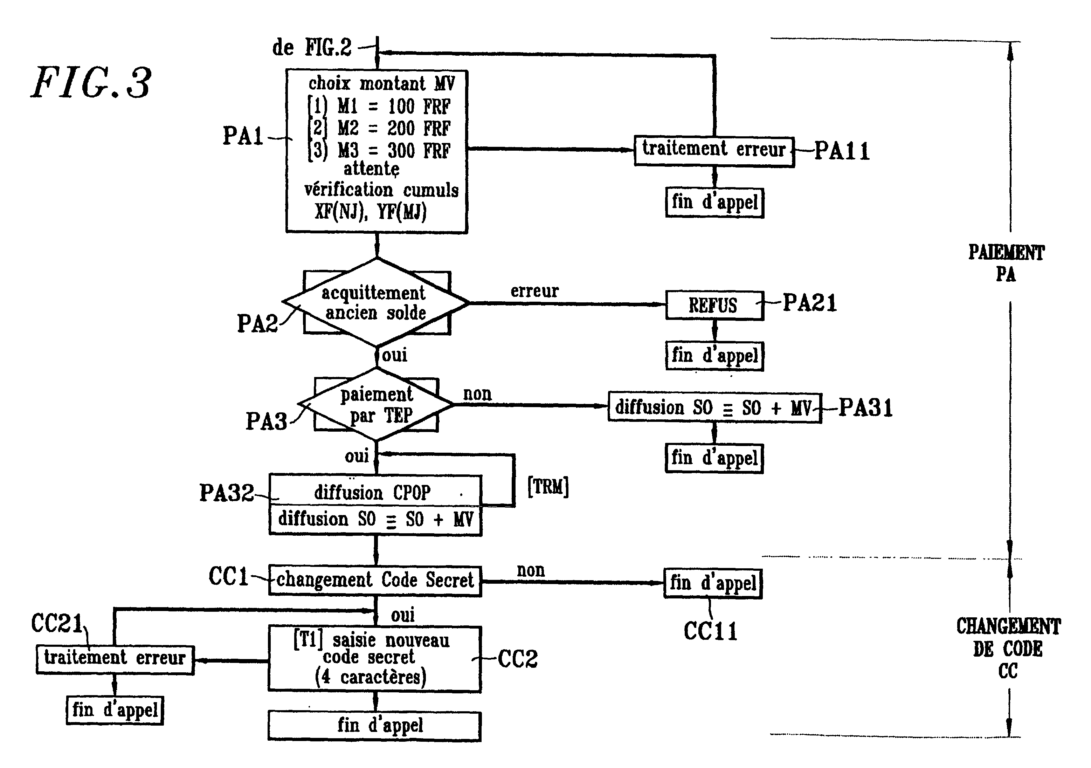

En référence à la figure 2, le **procédé de prépaiement** de consommation de communications téléphoniques comprend essentiellement quatre étapes principales, une étape d'appel et d'identification de poste ID, une étape de mode de paiement MD, une étape de paiement PA et, le cas échéant, une étape de changement de code secret CC.

L'étape d'identification de poste ID est mise en oeuvre par deux voies différentes, selon que l'usager souhaite créditer le compte CO du poste radiotéléphonique mobile prédéterminé PRM, soit à travers un appel téléphonique depuis un terminal téléphonique quelconque TTQ, qu'il soit un poste téléphonique fixe classique ou un poste d'un autre type par exemple radiotéléphonique mobile, soit à travers un appel téléphonique depuis le poste radiotéléphonique mobile prédéterminé PRM lui-même.

Lorsque l'usager décide d'utiliser le terminal téléphonique quelconque TTQ, l'étape d'identification comprend trois étapes ID1, ID2 et ID3 et une étape finale ID7 commune à l'autre voie. A l'étape initiale ID1, une communication avec le serveur vocal SV est établie et confirmée dans les étapes suivantes. L'usager compose le numéro téléphonique d'appel NSV du serveur vocal SV sur le clavier du terminal TTQ. Un message vocal d'accueil spécifique au service de prépaiement des postes téléphoniques mobiles est transmis par le serveur SV au terminal TTQ.

A l'étape suivante ID2, l'usager appuie sur la touche [*] et compose le numéro de dossier complet ND + CL associé au poste radiotéléphonique mobile prédéterminé PTM. En pratique, le numéro à composer par l'usager comprend le numéro de dossier ND proprement dit à six ou sept caractères, et une clé de contrôle CL à un caractère liée au numéro ND par l'algorithme prédéterminé pré-enregistré dans le serveur SV.

A l'étape ID2 et à l'étape suivante ID3, le serveur de prépaiement SPP reçoit du serveur vocal SV et contrôle le numéro de dossier ND identifiant le poste mobile PRM. La liste LND des numéros de dossier ND complétés de leurs clés respectives CL est enregistrée initialement dans le serveur de prépaiement SPP au fur et à mesure des ouvertures de compte et achat de postes radiotéléphoniques mobiles. Deux contrôles sont réalisés.

A l'étape ID2, le serveur vocal SV contrôle la cohérence de la clé CL avec le numéro de dossier composé ND selon l'algorithme de calcul prédéterminé préalablement à la consultation de la liste. Trois essais de composition du numéro ND + CL au maximum sont autorisés. Un message spécifique de refus résultant d'erreur de saisie ou d'une inaction pendant un temps prédéterminé est émis à l'étape ID21 par le serveur SV dans le cas d'un troisième échec à l'attention de l'usager. Le serveur vocal SV coupe alors la communication.

Si le serveur vocal SV a reconnu la cohérence des numéros ND avec la clé CL à l'étape ID2, il communique le numéro de dossier ND au serveur de prépaiement qui contrôle l'existence du numéro de dossier ND dans la liste LND à l'étape ID3. En cas de contrôle négatif, un message de refus spécifique, diffèrent du précédent et indiquant que le numéro composé ND ne correspond à aucun dossier numéroté dans la liste LND est émis à l'étape ID31 par le serveur SV sur instruction du serveur SPP, laquelle est également transmise au serveur de compte SCP.

En référence à la seconde voie dans l'étape principale d'appel et d'identification ID, l'usager décide d'utiliser le poste radiotéléphonique mobile prédéterminé PRM à l'étape initiale ID4. L'usager compose un numéro abrégé *55# sur son poste mobile PRM correspondant au serveur vocal SV à l'étape ID4.

Le système de gestion dans le réseau de poste radiotéléphonique mobile RPM traduit le numéro abrégé en le numéro d'appel NSV du serveur vocal SV ou un autre numéro affecté spécialement au serveur SV à l'étape ID5. Puis après l'établissement de la liaison avec le serveur SV, le système de gestion du réseau RPM compose le numéro de dossier ND sans la clé de contrôle CL, puisque le système de gestion, incluant notamment le serveur de compte SCP, reçoit à chaque appel par le poste PRM le numéro d'identification de poste NP mémorisé dans le poste PRM et associé au numéro ND du dossier lors de l'ouverture de celui-ci. Dans ce cas, le serveur vocal ne contrôle pas la clé CL associé au numéro de dossier ND. Un message vocal d'attente spécifique est émis par le serveur vocal SV pour vérification du numéro de dossier ND à l'étape ID6, comme à l'étape ID3.

Le serveur de prépaiement SPP contrôle l'existence du numéro de dossier ND. Si le numéro ND n'appartient pas à la liste LND, un message de refus, différent du message de refus à l'étape ID31 suite à une erreur de saisie, est émis à l'étape ID61 par le serveur vocal SV vers le poste PRM à travers le réseau RPM et ce refus est transmis également au serveur de comptes SCP.

Après l'identification du poste PRM succèdant à un appel par un terminal quelconque TTQ ou par le poste PRM, l'étape ID3 ou ID6 est suivie par une étape de consultation de solde ID7. Le serveur vocal SV envoie une demande de position de compte au serveur de prépaiement SPP.

Le serveur SPP contrôle alors le cumul du montant versé pour le dossier identifié par le numéro ND vérifié à l'étape ID3 ou ID6. Si ce cumul excède YF francs sur MJ jours glissants, un message de refus est émis et la communication est coupée, comme à l'étape PA11 décrite plus loin.

Si le cumul n'excède pas YF francs sur MJ jours glissants, le serveur SPP restitue le solde SO du compte CO en "temps réel" associé au poste PRM après une consultation directe dans le serveur SCP ayant reçu comme adresse le numéro de dossier ND.

Un message vocal est émis par le serveur SV indiquant à l'usager la position de son compte de consommation de communications téléphoniques CO, et la date et l'heure du dernier ticket de communication pris en compte.

En cas d'indisponibilité du serveur SCP ou de la liaison entre celui-ci et le serveur de prépaiement SPP, un message de type incident est émis par le serveur et la communication est coupée.

En appuyant sur une touche de réémission de message [TRM] correspondant en pratique au chiffre 8, l'usager peut réécouter le dernier message vocal.

Les **modes de paiement** suivants sont proposés à l'étape MD1 :
- par titre électronique de paiement TEP,
- par carte bancaire CB.

L'étape principale de mode de paiement MD est composée essentiellement de deux voies de demande de prépaiement selon que le client du poste PRM a opté ou non pour un prépaiement par titre électronique de paiement.

Si le dossier de titre électronique de paiement est valide, l'usager est orienté par un message spécifique vers la voie de demande de paiement par titre électronique de paiement, après consultation du serveur de prépaiement SPP. Si le dossier de titre électronique de paiement n'est pas validé, par exemple si la demande de prélèvement par titre électronique de paiement n'a pas été validée, l'usager sera orienté vers la voie de demande de paiement par carte bancaire. Ces deux voies de demande de prépaiement sont détaillées ci-après.

Si le client a opté pour le paiement par titre électronique de paiement, le serveur de prépaiement SPP contrôle l'existence de l'identité bancaire du client et la validité du dossier de titre électronique de paiement.

Le traitement réalisé par le serveur de prépaiement SPP dépend de l'existence ou non d'un code secret CS à 4 chiffres associé au relevé d'identité bancaire du client à l'étape MD2.

Si un prélèvement par titre électronique de paiement est valide à l'étape MD1 et si le code secret CS n'a pas été préalablement personnalisé, l'usager est invité par un message spécifique à choisir un code secret à 4 chiffres qui sera associé au relevé d'identité bancaire, à l'étape MD4. Si des erreurs de transmission ou si le code secret CS est composé trop lentement par exemple, un message de refus est transmis à l'usager et la communication est coupée après trois tentatives de numérotation à l'étape MD31.

Si le dossier de titre électronique de paiement est valide et si le code secret existe aux étapes MD1 et MD2, l'usager est invité par un message spécifique à l'étape MD3 à composer son code secret CS

Si l'usager tente de composer le code CS, le serveur SPP contrôle la validité du code composé CS par rapport à une liste de codes secrets adressée par le numéro de dossier. Trois essais au maximum sont autorisés. Après un troisième échec, un message de refus est émis à l'étape MD41 et la communication avec les serveurs SV et SPP est coupée.

Le message invitant l'usager à composer le code secret à l'étape MD4 invite également l'usager à choisir le second mode de paiement par carte bancaire en appuyant sur la touche étoile [*]. Quel que soit l'état du dossier de titre électronique de paiement, l'usager peut ainsi prépayer en ignorant le code secret CS, mais en débitant un compte bancaire a priori distinct de celui du client/propriétaire du poste radiotéléphonique PRM associé au numéro de dossier ND. Cette option autorise le client à louer ou prêter son poste PRM à l'usager sans comptabiliser le coût des communications entre eux.

En cas d'anomalie dans les contrôles précédents, lors de la composition du code secret CS, un message spécifique de refus est émis à l'étape MD41 et la voie de paiement par carte bancaire est offerte au client.

Comme on le verra dans la suite, le serveur SPP calcule un certificat provisoire d'opération de paiement CPOP et le restitue à l'usager avec l'accord de paiement. Si l'accord est refusé, le message de refus est alors émis et la communication avec le serveur de paiement est coupée.

Après l'étape MD1 ou MD4 indiquant que le paiement par titre électronique est impossible ou n'est pas sélectionné, l'usager demande un paiement par carte bancaire. L'usager compose alors son numéro de carte bancaire NCB compris entre 10 et 19 chiffres, suivi de la sollicitation de la touche dièse [#] à l'étape MD5. Les contrôles exercés par le serveur de prépaiement SPP sont en pratique les suivants :
- l'identification de carte bancaire étrangère qui est rejetée,
- la clé de contrôle de numéro de carte et la longueur du numéro de la carte,
- l'absence du numéro de carte NCB sur les listes d'opposition fournies par le serveur SB de la banque en relation avec l'organisation gestionnaire du réseau de poste radiotéléphonique mobile RPM.

Trois essais de composition du numéro de carte NCB sont autorisés au maximum. Un message de refus est émis dans le cas d'un troisième échec à l'étape MD51, et la communication avec le serveur de prépaiement est coupée.

En variante, à la place du numéro de carte bancaire NCB, l'usager compose un code secret de carte plus court, qui est également contrôlé par le serveur SPP.

Après la saisie correcte du code secret CS à l'étape MD3 ou MD4 ou du numéro de carte bancaire NCB à l'étape MD5 signalant l'acceptation d'une demande de prépaiement par le serveur SPP, **l'étape de paiement PA** comprenant trois étapes PA1, PA2 et PA3 est abordée.

Le serveur de prépaiement SPP propose trois choix C1, C2 et C3 correspondant respectivement aux touches du poste téléphonique [1], [2], [3] et à des montants de prépaiement par tranche : M1=100 FRF, M2=200 FRF et M3=300 FRF, à l'étape PA1. L'usager saisit l'un des trois choix C1, C2 et C3 en appuyant sur la touche correspondante du clavier de son poste TTC ou PRM, par exemple la touche [1], [2] ou [3].

Pour un paiement par carte bancaire, le serveur de prépaiement SPP demande une autorisation bancaire au serveur de banque SB si le cumul des montants versés au moyen de la carte bancaire excède XF Francs et/ou si le nombre des paiements au moyen de la carte bancaire excède un maximum MA sur NJ jours glissants. Pendant cette consultation, le serveur de prépaiement émet par l'intermédiaire du serveur vocal SV un message d'attente à l'étape PA1. Si l'autorisation est refusée, un message de refus est émis et la communication avec le serveur de prépaiement SPP est coupée à l'étape PA11.

Toujours à l'étape PA1, si un paiement par carte bancaire a été sélectionné et autorisé, ou si un paiement par titre électronique de paiement TEP a été sélectionné précédemment, le serveur de prépaiement SPP contrôle le cumul des montants versés pour le dossier correspondant au numéro ND. Si ce cumul excède YF Francs sur MJ jours glissants, un message de refus est alors émis à l'étape PA11, et la communication est coupée.

Lorsque les contrôles de cumul effectués par le serveur de prépaiement SPP sont positifs, le serveur de prépaiement envoie au serveur de comptes de poste SCP un message comprenant le numéro de dossier ND du client et le montant versé MV=M1, MV=M2 ou MV=M3 à additionner au compte de consommation CO. Le serveur SCP effectue une mise à jour automatique du solde actuel du compte de consommation et transmet au serveur SPP un message d'acquittement à l'étape PA2. L'ancien solde SO du poste PRM est retransmis avec cet acquittement dans un premier temps.

Si cet acquittement est négatif, le versement est refusé. Un message de refus est alors émis, la communication est coupée et la transaction est annulée à l'étape PA21.

De même, si l'acquittement n'existe pas, en cas d'indisponibilité de l'application ou de la liaison entre les serveurs SCP et SPP, un message de type incident est émis, la communication avec les serveurs SV et SPP est coupée et la transaction est annulée à l'étape PA21.

Après l'étape PA2, l'usager est informé par un message vocal de l'acceptation de son paiement et de son nouveau solde SO. Ce nouveau solde SO = SO + MV est calculé par le serveur SCP en additionnant le versement MV à l'ancien solde préalablement communiqué à l'usager, et le compte de consommation CO est mis à jour.

Si le paiement est reconnu comme effectué par carte bancaire, à l'étape suivante PA3, le serveur SPP diffuse à travers le serveur vocal SV le nouveau solde, puis la communication est coupée à l'étape PA31.

Si le paiement est reconnu comme effectué par titre électronique de paiement TEP à l'étape suivante PA3, le serveur SPP diffuse à travers le serveur le serveur SV, à l'étape PA32, non seulement le nouveau solde, mais également un certificat provisoire d'opération de paiement CPOP sous la forme du numéro de l'opération de paiement par titre électronique de paiement TEP que le client, titulaire du compte bancaire, retrouvera dans son relevé de compte bancaire.

Puis le serveur de prépaiement SPP passe à la dernière étape principale de **changement de code secret** CC. Le serveur vocal SV invite l'usager à changer son code secret à l'étape suivante CC1. Ce changement n'est possible que pour un paiement par titre électronique de paiement TEP, le mode de paiement par carte bancaire n'étant pas concerné par un code secret.

Si l'usager ne souhaite pas modifier le code secret, l'usager ou le serveur SV après une temporisation prédéterminée coupe la communication à l'étape CC11.

Si le changement de code secret est souhaité par l'usager, il le signale en appuyant sur une touche prédéterminée [T1], par exemple avec le chiffre 1, puis compose son nouveau code secret à quatre chiffres qui est différent de [0000], à l'étape CC2. Le serveur SV le transmet à travers le serveur SPP au serveur de compte de poste SCP qui remplace l'ancien code secret par le nouveau code secret. Puis la communication est coupée par l'usager ou le serveur SV.

Si des erreurs de transmission interviennent, le serveur SV invite l'usager à recomposer son code secret à l'étape CC21. Après trois tentatives, la communication est coupée.

Les données des versements effectifs et des opérations refusées selon le procédé ci-dessus décrit sont envoyées en temps réel sous forme de message d'opération sur la liaison (circuit virtuel commuté) X25 depuis le serveur de prépaiement SPP vers le serveur de comptes de poste SCP. Le message d'opération contient le numéro de dossier ND, la nature de l'opération, l'ensemble des éléments saisis par l'usager et la cause du refus éventuel.

La liste des versements présentés en compensation est envoyée par un message en temps différé, chaque nuit, du serveur de prépaiement SPP au serveur de banque SB et au serveur de comptes de poste SCP. Le message contient le numéro de dossier, les caractéristiques du versement concerné et la date de remise en banque.

A la fin de chaque communication prépayée mettant en oeuvre le poste prédéterminé PRM, un ticket de communication est établi et valorisé par un centre de relevé rapide en liaison avec les unités de raccordement de bornes dans le réseau de postes radiotéléphoniques mobiles RPM. La communication est valorisée au tarif donné par la caractéristique de l'abonnement au service de prépaiement. Chaque ticket de communication est transmis par le centre de relevé rapide au serveur de comptes SCP. Le montant du ticket est ajouté au total des consommations précédentes. Le nouveau montant total MT des consommations est comparé à une limite de consommation LC de la manière suivante :
- si le montant MT est supérieur ou égal à la limite LC, alors toute consommation de communication téléphonique est interdite au client, c'est-à-dire par l'intermédiaire du poste PRM du client ;
- si le montant MT est inférieur à la limite LC alors il n'y a pas de blocage, mais une alerte éventuelle ; deux seuils d'alerte S1 et S2 permettent à l'usager d'être informé par un message spécifique de l'approche de la fin de son crédit de consommation comptabilisé dans son compteur CO dans le serveur SCP.

Lorsque le montant MT franchit le seuil S1 qui est supérieur au seuil S2, un message d'alerte unique est transmis via les serveurs SPP et SV. Au franchissement du seuil S2 et à chaque communication tant que le montant est inférieur au seuil S2, un message d'alerte est transmis systématiquement via les serveurs SPP et SV.

Le message d'alerte est commun à toutes les alertes.

Bien que le procédé selon l'invention ait été décrit ci-dessus pour un prépaiement de consommation de communications téléphoniques relatif à un poste radiotéléphonique PRM, le procédé s'applique au prépaiement de consommation de communication téléphonique relatif à un quelconque terminal téléphonique, qu'il soit par exemple classique ou radiotéléphonique, ou bien de type vidéotex ou télétex relié simplement au réseau téléphonique commuté ou bien à travers un réseau de télécommunication spécialisé. Dans ce dernier cas, les messages d'information transmis par le serveur de prépaiement SPP sont traduits par le serveur SV en messages alphanumériques pour affichage ou impression dans le terminal et en messages vocaux pour terminal téléphonique classique.

## Revendications

1. Procédé pour prépayer une consommation de communications téléphoniques à établir au moyen d'un terminal prédéterminé (PRM) à travers un réseau téléphonique (RTC), comprenant les étapes suivantes :
- établir une communication (ID) depuis un terminal quelconque (TTQ, PRM) avec un moyen de traitement de prépaiement (SPP) à travers le réseau (RTC) de manière à transmettre un message d'identification (ND) identifiant le terminal prédéterminé (PRM) au moyen de traitement de prépaiement,
- en réponse à une identification du terminal prédéterminé, demander (MD) depuis le terminal quelconque (TTQ, PRM) un prépaiement de consommation de communications téléphoniques au moyen de traitement de prépaiement (SPP), et
- lorsque la demande de prépaiement est acceptée par le moyen de traitement de prépaiement, payer (PA) un montant (MV) transmis depuis le terminal quelconque (TTQ, PRM) afin que le moyen de traitement de prépaiement incrémente un compte de consommation (CO) associé au terminal prédéterminé (PRM),
**caractérisé en ce que** l'étape d'établir comprend une composition (ID2) d'un numéro d'identification (ND) identifiant le terminal prédéterminé (PRM) et d'une clé de contrôle (CL) sur le terminal quelconque de manière à les inclure dans le message d'identification, et un contrôle (ID2) de la cohérence entre le numéro d'identification (ND) et la clé (CL) selon un algorithme prédéterminé dans le moyen de traitement de prépaiement (SPP), et lorsque la cohérence est établie, la vérification de l'appartenance du numéro d'identification (ND) à une liste (LND) enregistrée dans le moyen de traitement de prépaiement (SPP), la communication étant coupée (ID21, ID31) par le moyen de traitement de paiement lorsque le nombre de défauts de cohérence excède un nombre prédéterminé, ou le numéro d'identification n'est pas inclus dans la liste.

2. Procédé conforme à la revendication 1, selon lequel, lorsque lesdits terminaux prédéterminé et quelconque sont confondus en un terminal radiotéléphonique (PRM) relié au réseau téléphonique (RTC) par un réseau radiotéléphonique (RPM), ladite composition d'un numéro d'identification et d'une clé de contrôle sur le terminal quelconque et ledit contrôle de la cohérence entre le numéro d'identification et la clé sont supprimés, ledit numéro d'identification sans clé de contrôle étant inclus dans le message d'identification qui est transmis par le réseau radiotéléphonique (RPM) au moyen de traitement de prépaiement (SPP) après un appel (ID4) du réseau radiotéléphonique (RPM) par le terminal radiotéléphonique en composant un numéro téléphonique particulier (*55#), et une traduction (ID5) du numéro téléphonique particulier en un numéro d'appel (NSV) du moyen de traitement de prépaiement (SPP) par le réseau radiotéléphonique, la communication étant coupée (ID61) par le moyen de traitement de paiement lorsque, après ladite vérification de l'appartenance du numéro d'identification (ND) à ladite liste (LND), le numéro d'identification n'est pas inclus dans la liste.

3. Procédé conforme à la revendication 1 ou 2, selon lequel le moyen de traitement de prépaiement (SPP) transmet des messages au terminal quelconque (TTQ, PRM) à travers un serveur (SV) de messages vocaux et/ou alphanumériques.

4. Procédé conforme à l'une quelconque des revendications 1 à 3, selon lequel l'étape de demander (MD) comprend une sélection entre au moins deux modes de paiement (MD4).

5. Procédé conforme à l'une quelconque des revendications 1 à 4, selon lequel l'étape de demander comprend un traitement électronique de paiement (TEP) consistant à composer (MD4) un code secret (CS) au terminal quelconque, le moyen de traitement de prépaiement (SPP) acceptant la demande de prépaiement lorsque le code secret est reconnu en association avec le message d'identification (ND) et n'a pas été tenté d'être composé un nombre de fois prédéterminé.

6. Procédé conforme à la revendication 5, selon lequel le code secret (CS) est enregistré (MD3) dans le moyen de traitement de prépaiement (SPP), sans comparaison au message d'identification (ND), lorsque le compte de consommation (CO) est incrémenté pour la première fois par un montant résultant d'un titre électronique de paiement (TEP).

7. Procédé conforme à l'une quelconque des revendications 1 à 6, selon lequel l'étape de demander comprend un paiement par carte bancaire (MD5) en composant sur le terminal quelconque (TTQ, PRM) un numéro prédéterminé (NCB) transmis au moyen de traitement de prépaiement (SPP) qui accepte la demande de prépaiement lorsque le numéro prédéterminé a une longueur correcte et/ou n'appartient pas à une liste de numéros prédéterminée.

8. Procédé conforme à l'une quelconque des revendications 1 à 7, selon lequel le moyen de traitement de prépaiement (SPP) refuse ledit montant (MV) lorsque un des cumuls de montants versés au moyen de l'un sélectionné de modes de paiement (TEP, CB) et de montants versés sur le compte de consommation (CO) associé au terminal prédéterminé (PRM) excède un montant maximal respectif (XF, YF) sur un nombre respectif de jours (NJ, MJ), et/ou lorsque le nombre de paiements au moyen du mode de paiement sélectionné excède un nombre maximal respectif sur un nombre respectif de jours.

9. Procédé conforme à l'une quelconque des revendications 1 à 8, selon lequel, à l'étape de payer (PA), le moyen de traitement de prépaiement (SPP) transmet au terminal quelconque (TTQ, PRM) le solde (SO) du compte de consommation (CO) avant et après incrémentation du compte de consommation (ID7, PA2 ; PA31, PA32).

10. Procédé conforme à l'une quelconque des revendications 1 à 9, selon lequel, après incrémentation du compte de consommation (CO), le moyen de traitement de prépaiement (SPP) transmet un certificat provisoire de paiement (CPOP) au terminal quelconque (TTQ, PRM), lorsque le paiement (PA) est un titre électronique de paiement (TEP).

11. Procédé conforme à l'une quelconque des revendications 1 à 10, comprenant après l'étape de payer (PA), une invitation (CC1) à changer un code secret (CS) pour titre électronique de paiement (TEP), et en cas de réponse positive à l'invitation, un changement de code secret (CC2).

## Patentansprüche

1. Verfahren zur Vorausbezahlung von Telephonverbindungen, die mit Hilfe einer vorher festgelegten Endeinrichtung (PRM) durch ein Telephonnetz (RTC) hergestellt werden soll, die folgenden Schritte umfassend:
- Herstellen einer Verbindung (ID) von einer beliebigen Endeinrichtung (TTQ, PRM) aus durch das Telephonnetz (RTC) mit einem Mittel zur Vorausbezahlungsverarbeitung (SPP), indem eine Identifikationsmeldung (ND), die die vorher festgelegte Endeinrichtung (PRM) identifiziert, zum Mittel zur Vorausbezahlungsverarbeitung übertragen wird,
- Beantragen (MD) einer Vorausbezahlung der Telephongespräche durch die beliebige Endeinrichtung (TTQ, PRM) beim Mittel zur Vorausbezahlungsverarbeitung (SPP) in Reaktion auf eine Identifizierung der vorher festgelegten Endeinrichtung, und
- wenn der Antrag auf Vorausbezahlung durch das Mittel zur Vorausbezahlungsverarbeitung angenommen worden ist, Zahlen (PA) eines Betrages (MV), der von der beliebigen Endeinrichtung (TTQ, PRM) übertragen wurde, damit das Mittel zur Vorausbezahlungsverarbeitung einen Gesprächszähler (CO) inkrementiert, der zur vorher festgelegten Endeinrichtung (PRM) gehört,
**dadurch gekennzeichnet, dass** der Herstellungsschritt die Eingabe (ID2) einer Identifikationsnummer (ND) umfasst, die die vorher festgelegte Endeinrichtung (PRM) identifiziert, und eines Prüfschlüssels (CL) in der beliebigen Endeinrichtung, so dass sie in die Identifikationsmeldung eingefügt werden, und eine Prüfung (ID2) der Kohärenz zwischen der Identifikationsnummer (ND) und dem Prüfschlüssel (CL) nach einem vorher festgelegten Algorithmus im Mittel zur Vorausbezahlungsverarbeitung (SPP), und wenn die Kohärenz festgestellt worden ist, die Überprüfung der Zugehörigkeit der Identifikationsnummer (ND) zu einer Liste (LND), die im Mittel zur Vorausbezahlungsverarbeitung (SPP) gespeichert ist, wobei die Verbindung durch das Mittel zur Vorausbezahlungsverarbeitung unterbrochen wird (ID21, ID31), wenn die Zahl der Kohärenzfehler eine vorher festgelegte Anzahl übersteigt oder die Identifikationsnummer nicht in der Liste aufgeführt ist.

2. Verfahren nach Patentanspruch 1, in dem, wenn die genannte vorher festgelegte und die genannte beliebige Endeinrichtung in einer Funktelephonendeinrichtung (PRM) zusammenfallen, die durch ein Funktelephonnetz (RPM) mit dem Telephonnetz (RTC) verbunden ist, die genannte Eingabe einer Identifikationsnummer und eines Prüfschlüssels in der beliebigen Endeinrichtung und die genannte Prüfung der Kohärenz zwischen der Identifikationsnummer und dem Schlüssel unterdrückt werden, indem die genannte Identifikationsnummer ohne Prüfschlüssel in der Identifikationsmeldung enthalten ist, die vom Funktelephonnetz (RPM) zum Mittel zur Vorausbezahlungsverarbeitung (SPP) nach einem Anruf (ID4) des Funktelephonnetzes (RPM) durch die Funktelephonendeinrichtung bei Eingabe einer besonderen Telephonnummer (*55#) gesendet wird, und einer Übersetzung (ID5) der besonderen Telephonnummer in eine Rufnummer (NSV) des Mittels zur Vorausbezahlungsverarbeitung (SPP) durch das Funktelephonnetz gesendet wird, wobei die Verbindung durch das Mittel zur Zahlungsverarbeitung nach der genannten Überprüfung der Zugehörigkeit der Identifikationsnummer (ND) zur genannten Liste (LND) unterbrochen wird (ID61), wenn die Identifikationsnummer nicht in der Liste aufgeführt ist.

3. Verfahren nach Patentanspruch 1 oder 2, in dem das Mittel zur Vorausbezahlungsverarbeitung (SPP) über einen Server (SV) von alphanumerischen oder Sprachmeldungen Meldungen zur beliebigen Endeinrichtung (TTQ, PRM) sendet.

4. Verfahren nach irgendeinem der Patentansprüche 1 bis 3, in dem der Beantragungsschritt (MD) eine Wahl zwischen mindestens zwei Zahlungsarten (MD4) umfasst.

5. Verfahren nach irgendeinem der Patentansprüche 1 bis 4, in dem der Beantragungsschritt eine elektronische Zahlungsverarbeitung (TEP) umfasst, die darin besteht, eine Geheimnummer (CS) an der beliebigen Endeinrichtung einzugeben (MD4), wobei das Mittel zur Vorausbezahlungsverarbeitung (SPP) den Antrag auf Vorauszahlung annimmt, wenn die Geheimnummer in Verbindung mit der Identifikationsmeldung (ND) erkannt wird und nicht nach einer vorher festgelegten Anzahl wiederholter Versuche eingegeben wurde.

6. Verfahren nach Patentanspruch 5, in dem die Geheimnummer (CS) ohne Vergleich mit der Identifikationsmeldung (ND) im Mittel zur Vorausbezahlungsverarbeitung (SPP) gespeichert wird (MD3), wenn das Verbrauchskonto (CO) zum ersten Mal um einen Betrag inkrementiert wurde, der aus einer elektronischen Zahlungsanweisung (TEP) hervorgeht.

7. Verfahren nach irgendeinem der Patentansprüche 1 bis 6, in dem der Beantragungsschritt eine Zahlung per Geldkarte (MD5) umfasst, indem in der beliebigen Endeinrichtung (TTQ, PRM) eine vorher festgelegte Nummer (NCB) eingegeben wird, die zum Mittel zur Vorausbezahlungsverarbeitung (SPP) gesendet wird, das den Vorauszahlungsantrag annimmt, wenn die vorher festgelegte Nummer eine korrekte Länge hat und/oder nicht einer Liste vorher festgelegter Nummern angehört.

8. Verfahren nach irgendeinem der Patentansprüche 1 bis 7, in dem das Mittel zur Vorausbezahlungsverarbeitung (SPP) den genannten Betrag (MV) ablehnt, wenn eine der Summen der Beträge, die mit Hilfe einer ausgewählten der Zahlungsarten (TEP, CB) gezahlt wurden, und der auf das zur vorher festgelegten Endeinrichtung (PRM) gehörende Verbrauchskonto (CO) eingezahlten Beträge einen entsprechenden Maximalbetrag (XF, YF) in einer entsprechenden Zahl Tage (NJ, MJ) überschreitet, und/oder wenn die Anzahl der Zahlungen mit Hilfe der ausgewählten Zahlungsart eine entsprechende Maximalzahl in einer entsprechenden Anzahl Tagen überschreitet.

9. Verfahren nach irgendeinem der Patentansprüche 1 bis 8, in dem das Mittel zur Vorausbezahlungsverarbeitung (SPP) im Zahlungsschritt (PA) der beliebigen Endeinrichtung (TTQ, PRM) den Saldo (SO) des Verbrauchskontos (CO) vor und nach Inkrementierung des Verbrauchskontos (ID7, PA2; PA31, PA32) übermittelt.

10. Verfahren nach irgendeinem der Patentansprüche 1 bis 9, in dem das Mittel zur Vorausbezahlungsverarbeitung (SPP) nach Inkrementierung des Verbrauchskontos (CO) der beliebigen Endeinrichtung (TTQ, PRM) einen provisorischen Zahlungsbeleg (CPOP) sendet, wenn die Zahlung (PA) eine elektronische Zahlungsanweisung (TEP) ist.

11. Verfahren nach irgendeinem der Patentansprüche 1 bis 10, nach dem Zahlungsschritt (PA) eine Aufforderung (CC1) zur Änderung einer Geheimzahl (CS) für elektronische Zahlungsanweisungen (TEP) umfassend und im Fall einer positiven Antwort auf die Aufforderung eine Änderung der Geheimzahl (CC2).

## Claims

1. A method of prepaying for consumption of telephone calls to be set up by means of a predetermined terminal (PRM) via a switched telephone network (RTC), comprising the following steps :
- setting up a call (ID) from any terminal (TTQ, PRM) to prepayment processing means (SPP) via the switched telephone network (RTC) in order to transmit an identification message (ND) identifying the predetermined terminal (PRM) to the prepayment processing means,
- in response to an identification of the predetermined terminal, requesting (MD) from any terminal (TTQ, PRM) a prepayment of telephone call consumption to the prepayment processing means (SPP), and
- if the prepayment request is accepted by the prepayment processing means, paying (PA) an amount (MV) transmitted from any terminal (TTQ, PRM) so that the prepayment processing means increments a consumption count (CO) associated with the predetermined terminal (PRM),
**characterized in that** the setting-up step comprises an entry (ID2) of an identification number (ND) identifying the predetermined terminal (PRM) and of a control key (CL) at any terminal thereby included them in the identification message, and a check (ID2) of consistency between the identification number (ND) and the key (CL) in accordance with a predetermined algorithm in the prepayment processing means (SPP), and when consistency is established, a verification that the identification number (ND) belongs to a list (LND) stored (LND) in the prepayment processing means (SPP), the call being cleared down (ID21, ID31) by the payment processing means when the number of consistency errors exceeds a predetermined number or the identification number is not included in the list.

2. The method according to claim 1, wherein, when said predetermined terminal and any terminal are merged into a radio phone terminal (PRM) connected to the switched telephone network (RTC) via a radio phone network (RPM), said entry of an identification number and of a control key at any terminal and said consistency check between the identification number and the key are eliminated, said identification number with no control key being included in the identification message that is transmitted by the radiotelephonic network (RPM) to the prepayment processing means (SPP) after a call (ID4) to the radio phone network (RPM) from the radio phone terminal by entering a particular telephone number (*55#), and a translation (ID5) of the particular telephone number into a call number (NSV) of the prepayment processing means (SPP) by the radiotelephonic network, the call being cleared down (ID61) by the prepayment processing means if, after said check that the identification number (ND) belongs to said list (LND), the identification number is not included in the list.

3. The method claimed in claim 1 or 2, wherein the prepayment processing means (SPP) transmits messages to the any terminal (TQQ, PRM) via a voice and/or alphanumeric message server (SV).

4. The method claimed in any one of claims 1 to 3, wherein the step of requesting (MD) includes a selection between at least two methods of payment (MD4).

5. The method claimed in any one of claims 1 to 4, wherein the step of requesting includes electronic payment processing (TEP) entailing entry (MD4) of a secret code (CS) at the any terminal, the prepayment processing means (SPP) accepting the prepayment request if the secret code is recognized in association with the identification message (ND) and its entry has not been attempted a predetermined number of times.

6. The method claimed in claim 5, wherein the secret code (CS) is recorded (MD3) in the prepayment processing means (SPP), without comparing it with the identification message (ND), when the consumption count (CO) is incremented for the first time by an amount resulting from an electronic funds transfer (TEP).

7. The method claimed in any one of claims 1 to 6, wherein the step of requesting includes a bank card payment (MD5) by entering at the any terminal (TTQ, PRM) a predetermined number (NCB) transmitted to the prepayment processing means (SPP) which accepts the prepayment request if the predetermined number is the correct length and/or does not belong in a predetermined list of numbers.

8. The method claimed in any one of claims 1 to 7, wherein the prepayment processing means (SPP) refuses said amount (MV) if one of cumulative amounts paid by means of a selected one of methods of payment (TEP, CB) and of amounts paid to the consumption account (CO) associated with the predetermined terminal (PRM) exceeds a respective maximal amount (XF, YF) over a respective number of days (NJ, MJ), and/or if the number of payments by the selected method of payment exceeds a respective maximal number over a respective number of days.

9. The method claimed in any one of claims 1 to 8, wherein, in the step of paying (PA), the prepayment processing means (SPP) transmits to the any terminal (TTQ, PRM) the balance (SO) of the consumption count (CO) before and after incrementing of the consumption count (ID7, PA2 ; PA31, PA32).

10. The method claimed in any one of claims 1 to 9, wherein, after incrementing the consumption count (CO), the prepayment processing means (SPP) transmits a provisional payment certificate (CPOP) to any terminal (TTQ, PRM), if the payment (PA) is an electronic funds transfer (TEP).

11. The method claimed in any one of claims 1 to 10, including after the step of paying (PA), a prompt (CC1) to change a secret code (CS) used for electronic funds transfer (TEP), and in the event of a positive response to the prompt, a change of secret code (CC2).
